# EUROPEAN PATENT SPECIFICATION

(11) **EP 3 076 593 B1**
(45) Date of publication and mention of the grant of the patent: **28.02.2018**
(21) Application number: 15196620.7
(22) Date of filing: 26.11.2015
(51) Int. Cl.: H04L 12/64

(54) **METHODS AND SYSTEMS FOR EVOLVING AN ADAPTIVE SMART HOME NETWORK**
VERFAHREN UND SYSTEME ZUR ENTWICKLUNG EINES ADAPTIVEN SMART-HOME-NETZWERKS
PROCÉDÉS ET SYSTÈMES POUR FAIRE ÉVOLUER UN RÉSEAU DOMESTIQUE INTELLIGENT ADAPTATIF

(30) Priority: 30.03.2015 IN 1656CH2015; 23.06.2015 US 201514748159
(43) Date of publication of application: 05.10.2016
(73) Proprietor: Wipro Limited, 560 035 Karnataka (IN)
(72) Inventor: VERMA, Manish, 560035 Karnataka (IN); JOSE, Tinku Malayil, 560068 Karnataka (IN)
(74) Representative: Finnegan Europe LLP

(56) References cited:
- EP-A1- 1 835 668
- WO-A2-2006/110199
- CN-A- 102 111 789
- MONEKOSSO DOROTHY N ET AL: "Data reconciliation in a smart home sensor network", EXPERT SYSTEMS WITH APPLICATIONS, OXFORD, GB, vol. 40, no. 8, 21 December 2012 (2012-12-21), pages 3248-3255, XP028982559, ISSN: 0957-4174, DOI: 10.1016/J.ESWA.2012.12.037

## Description

### Technical Field

This disclosure relates generally to smart home networks and more particularly to methods and systems for evolving an adaptive smart home network.

### Backaround

In a smart home network, various member devices interface with each other to form an intelligent network. These member devices include sensors (for example, temperature, smoke, humidity, and proximity), actuators (for example, thermostat and control switch), gateways (for example, media-gateway and security-gateway), and consumer devices (for example, oven, refrigerator, AC). Additionally, the smart home network may include provision of services (for example, security, gas, water). The interfacing amongst the member devices is facilitated through a smart home gateway. As a result of this interfacing, an automated living environment may be provided to home users.

However, the only interface with the external world for conventional smart home networks is through the smart home gateway. As a result, any breakdown in communication with the smart home gateway or complete failure of the smart home gateway may lead to failure in detection of an issue (for example, a gas leak or fire) that may occur inside a home.

WO 2006/110199 A2 discloses a method by which a number of sensor nodes forming a network can self-organize so as to reduce energy consumption and/or improve coverage of a surveillance field. The method includes establishing communication between the nodes, estimating a location for each node within the network, determining coverage of each node, deactivating any nodes that only provide coverage also provided by other nodes, and repositioning nodes if necessary.

EP 1835668 A1 discloses a method for controlling transmission of data from sensor nodes to a monitor node of a network. The method includes generating a graph connecting the sensor nodes and monitor node, with edges of the graph connecting pairs of sensor nodes to each other when a distance between the nodes in the pair is below a threshold, and connecting a sensor node to the monitor node. The method further includes obtaining an associated energy level or energy consumption for each of the sensor nodes, and assigning weights to the edges of the graph based on the energy level or consumption, and data aggregation. The method also includes defining a routing tree including routes from all sensor nodes to the monitor node.

CN 102111789 A discloses a method for repairing a fault of a wireless sensor network. The method includes establishing, based on a fuzzy mathematics and linear program method, a membership matrix which represents the membership degree of a redundant node on a fault node and a replacement matrix which represents the redundant node on the fault node and restriction conditions, constructing a target function of the redundant node to replace the fault node according to the membership matrix and the replacement matrix, and selecting an optimal redundant node to replace the fault node based on a genetic algorithm.

"Data reconciliation in a smart home sensor network" by D. N. Monekosso and P Remagnito describes a data-driven approach to sensor data validation and, in particular, methodologies for dealing with permanent and transient faults affecting one or more sensors in a small sensor network, such as a smart home. The principal component analysis (PCA) and the canonical correlation analysis (CCA) techniques are discussed and compared with reference to detecting intermittent faults and masking such failures.

### SUMMARY

In one embodiment, a method for evolving a smart home network comprising a plurality of devices is disclosed. The method incudes detecting a change in at least one property associated with the smart home network; updating a capability matrix associated with each of the plurality of devices in the smart home network amongst the plurality of devices in response to detecting the change, the capability matrix comprising information related to functional capabilities associated with each of the plurality of devices in the smart home network; determining a current network topology for the plurality of devices in response to detecting the change, wherein the current network topology comprises weighted information related to the at least one property, the weighted information including priority associated with one or more devices in the plurality of devices and/or one or more communication channels of the smart home network, wherein determining the current network topology comprises creating (306a) an event correlation map based on the updated capability matrix (702) and the weighted information related to the at least one property; and identifying a subset of devices from within the plurality of devices based on the current network topology to offset the change in the at least one property, identifying the subset of devices comprising creating, based on the event correlation map, an event traversal map for the smart home network comprising a plurality of event traversal paths associated with a plurality of events, each of the plurality of event traversal paths comprising information corresponding to a primary owner of an event, a secondary owner of the event, and a communication channel to be used in response to an occurrence of the event, wherein the subset of devices is adapted to respond to an event that the smart home network was configured to mitigate before the change and lost capability to mitigate after the change.

In another embodiment, a system for evolving a smart home network comprising a plurality of devices is disclosed. The system includes at least one processor; and a computer-readable medium storing instructions that, when executed by the at least one processor, cause the at least one processor to perform operations comprising: detecting a change in at least one property associated with the smart home network; updating a capability matrix associated with each of the plurality of devices in the smart home network amongst the plurality of devices in response to detecting the change, the capability matrix comprising information related to functional capabilities associated with each of the plurality of devices in the smart home network; determining a current network topology for the plurality of devices in response to detecting the change, wherein the current network topology comprises weighted information related to the at least one property, the weighted information including priority associated with one or more devices in the plurality of devices and/or one or more communication channels of the smart home network, wherein determining the current network topology comprises creating (306a) an event correlation map based on the updated capability matrix (702) and the weighted information related to the at least one property; and identifying a subset of devices from within the plurality of devices based on the current network topology to offset the change in the at least one property, identifying the subset of devices comprising creating, based on the event correlation map, an event traversal map for the smart home network comprising a plurality of event traversal paths associated with a plurality of events, each of the plurality of event traversal paths comprising information corresponding to a primary owner of an event, a secondary owner of the event, and a communication channel to be used in response to an occurrence of the event, wherein the subset of devices is adapted to respond to an event that the smart home network was configured to mitigate before the change and lost capability to mitigate after the change.

There is also provided a system for evolving a smart home network comprising a plurality of devices, the system comprising: at least one processors; and a computer-readable medium storing instructions that, when executed by the at least one processor, cause the at least one processor to perform operations comprising: detecting a change in at least one property associated with the smart home network; determining a current network topology for the plurality of devices in response to detecting the change, wherein the current network topology comprises weighted information related to the at least one property; and identifying a subset of devices from within the plurality of devices based on the current network topology to offset the change in the at least one property, wherein the subset of devices is adapted to respond to an event that the smart home network was configured to mitigate in the absence of the change.

The operations may further comprise updating a capability matrix associated with each of the plurality of devices in the smart home network amongst the plurality of devices in response to detecting the change, wherein the capability matrix comprises information related to functional capabilities associated with each of the plurality of devices in the smart home network.

The operation of determining the current network topology may comprise an operation of creating an event correlation map based on the updated capability matrix associated with each of the plurality of devices and the weighted information related to the at least one property.

The operation of identifying the subset of devices may comprise an operation of creating an event traversal map for the smart home network based on the event correlation map, the event traversal map comprising a plurality of event traversal paths associated with a plurality of events, each of the plurality of event traversal paths comprising information corresponding to a primary owner of an event, a secondary owner of the event, and communication channel to be used in response to occurrence of the event.

The operation of identifying the subset of devices may comprise an operation of updating a decision tree associated with each of the plurality of devices, wherein a decision tree associated with a device comprises information corresponding to actions to be performed by the device in response to occurrence of at least one event.

The operation of updating the decision tree associated with a device within the plurality of devices may further comprise an operation of: assigning data handling roles to the device based on proximity of the device with data; and creating new nodes within the decision trees.

The system may further comprise an operation of: handing over from a device within the plurality of devices, an action corresponding to an event, to a secondary device comprising capability to perform the action; and updating the decision tree in response to the handing over, when a decision tree associated with the device is incomplete to handle the event.

In yet another embodiment, a non-transitory computer-readable storage medium for evolving a smart home network comprising a plurality of devices is disclosed. When executed by a computing device, the non-transitory computer-readable storage medium cause the computing device to: detect a change in at least one property associated with the smart home network; determine a current network topology for the plurality of devices in response to detecting the change, wherein the current network topology comprises weighted information related to the at least one property; and identify a subset of devices from within the plurality of devices based on the current network topology to offset the change in the at least one property, wherein the subset of devices is adapted to respond to an event that the smart home network was configured to mitigate in the absence of the change

There is also provided a non-transitory computer-readable storage medium for evolving a smart home network comprising a plurality of devices, when executed by a computing device, cause the computing device to: detect a change in at least one property associated with the smart home network; determine a current network topology for the plurality of devices in response to detecting the change, wherein the current network topology comprises weighted information related to the at least one property; and identify a subset of devices from within the plurality of devices based on the current network topology to offset the change in the at least one property, wherein the subset of devices is adapted to respond to an event that the smart home network was configured to mitigate in the absence of the change.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is an exemplary environment in which various embodiments may function.
**FIG. 2** illustrates a flowchart of a method for evolving a smart home network that includes a plurality of devices, in accordance with an embodiment.
**FIG. 3** illustrates a flowchart of a method for evolving a smart home network that includes a plurality of devices, in accordance with another embodiment.
**FIG. 4** illustrates a flowchart of a method for handing over an action from a primary device to a secondary device, in accordance with an embodiment.
**FIG. 5** illustrates a flowchart of a method for updating a decision tree, in accordance with an embodiment.
**FIG. 6** is a block diagram of a system for evolving a smart home network, in accordance with an embodiment.
**FIGs. 7A** **and** **7B** illustrate a smart home network, a capability matrix, and a decision tree, in an exemplary embodiment.
**FIG. 8** is an exemplary computer system for implementing various embodiments.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

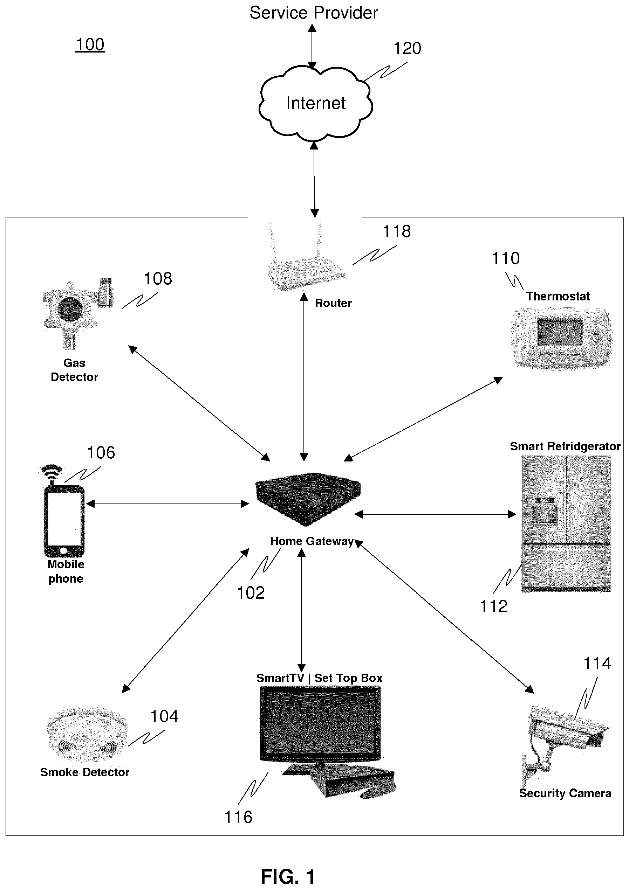

Additional illustrative embodiments are listed below. In one embodiment, an exemplary environment 100, in which various embodiments may function is disclosed in FIG. 1. Environment 100 includes a home gateway 102 that is directly or indirectly in communication with a plurality of devices in a smart home network. This communication with the plurality of devices may be enabled through wireless and/or wired means.

The plurality of devices, for example, may include a smoke detector 104, a mobile phone 106, a gas detector 108, a thermostat 110, a smart refrigerator 112, a security camera 114, and a smart TV or a set-top box 116. Other examples (not shown in the FIG. 1) of the plurality of devices may include, but are not limited to a humidity sensor, a proximity sensor, tablets, PCs, a media-gateway, a security-gateway, HVAC equipment, lighting control, a gas valve, shutter control, an air conditioner, an oven, lighting appliances, medical devices, healthcare devices, and fitness equipment.

One or more of the plurality of devices may be sensors, for example, a smoke detector 104, a gas detector 108, and/or a security camera 114. These sensors are configured to detect changes inside or around the periphery of the place they are installed in. Once an event or change is detected by a sensor (for example, a gas leak detected by gas detector 108 or rise/drop in temperature detected by a temperature sensor), this event or change is communicated to home gateway 102. In one scenario, home gateway 102 may communicate with an actuator in the smart home network to handle the event. One or more of the plurality of devices may be actuators; for example, thermostat 110, a gas valve (not shown), and an alarm (not shown). By way of an example, in the case of an increase or a decrease in temperature beyond a certain threshold, home gateway 102 may direct thermostat 110 to control the temperature.

In an alternative scenario, home gateway 102 may communicate with a router 118, which further connects with the internet 120 to transfer information regarding this event or change to a service provider. The service provider accordingly takes a desired action in response to the event or change. By way of an example, in the case of a gas leak, the action to be taken by the service provider may be to activate a gas valve in order to cut off the gas supply. The service provider may also facilitate a user to communicate with smart devices in the smart home network. For example, a user may remotely control functionalities of a smart TV or set-top box 116 or a smart refrigerator 112 through home gateway 102 using his/her mobile device, which is further in communication with home gateway 102 or with the service provider. Similarly, the smart TV or set-top box 116 may be able to send information regarding currently playing movies or recordings to the user through home gateway 102.

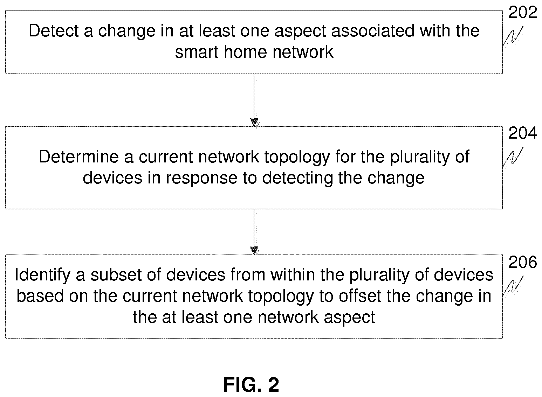

FIG. 2 illustrates a flowchart of a method for evolving a smart home network that includes a plurality of devices, in accordance with an embodiment. Each of the plurality of devices may be categorized as one or more of a master device, a primary device, a slave device, and a secondary device. A master device is one which is configured to handle an event occurring within the periphery of a home by performing a desired action and also has decision taking capabilities. The event, for example, may be a fire or a gas leak and the action may be to activate the sprinklers in case of a fire or to activate a gas valve in the case of a gas leak. A slave device is that which is controlled by a respective master device and its communication may be limited to that master device only. Further, a primary device, which may also be a master device in a scenario, is that which has the prime role to handle a particular event. In the case when the primary device is not operational or is offline, a secondary device may be handed over the functionality of the primary device.

When the smart home network is initiated, a check may be performed to detect whether there has been any change in one or more properties of the smart home network. Additionally, after the smart home network has been initiated, the check may be performed periodically after fixed intervals. The check may also be performed when the smart home network is restarted or when an anomaly is detected within the smart home network. In other words, performing the check is a continual process. At 202, a change may be detected in one or more properties associated with the smart home network. The one or more properties may include but are not limited to a functional state of a device, a functional capability of the device, a functional state of communication channels between the plurality of devices, a functional state of external communication channels, a functional state of a plurality of actuators, and a functional state of a plurality of sensors within the smart home network.

The functional state of a device means whether that device is currently operational and is online. In an embodiment, if a device has been offline for more than a predefined time threshold, it may be assumed that the device is non-operational. As a result, the functionality of that device may be handed over to a secondary device. For example, if wireless router 118 is not working, mobile device 106 may be used to connect to the internet 120 to communicate information to the service provider. Further, the functional capability of a device primarily may include a storage and processing capability of the device. Additionally, the functional capability of the device may include a communication capability of a device, a decision making capability of a device, an action capability of the device, and a primary or secondary functionality of a device.

The functional state of communication channels between the plurality of devices and the functional state of external communication channels may include reliability, quality of service parameters (for example, mean time to failure (MTTF), mean time between failures (MTBF), mean time to repair (MTTR)), availability, cost effectiveness, bandwidth, roundtrip delay, and jitter. The external communication channels are the communication channels that the smart home network may use to connect to the internet 120 and thereon to the service provider or user devices outside the smart home network.

Further, the functional state of an actuator or a sensor means whether the actuator or the sensor is currently operational and is online. For example, in terms of a gas valve, the functional state may be whether, if at all, the gas valve is able to cut off the gas supply promptly. By way of another example, in terms of gas detector 108, the functional state may be whether, if at all, gas detector 108 is able to promptly detect a gas leak.

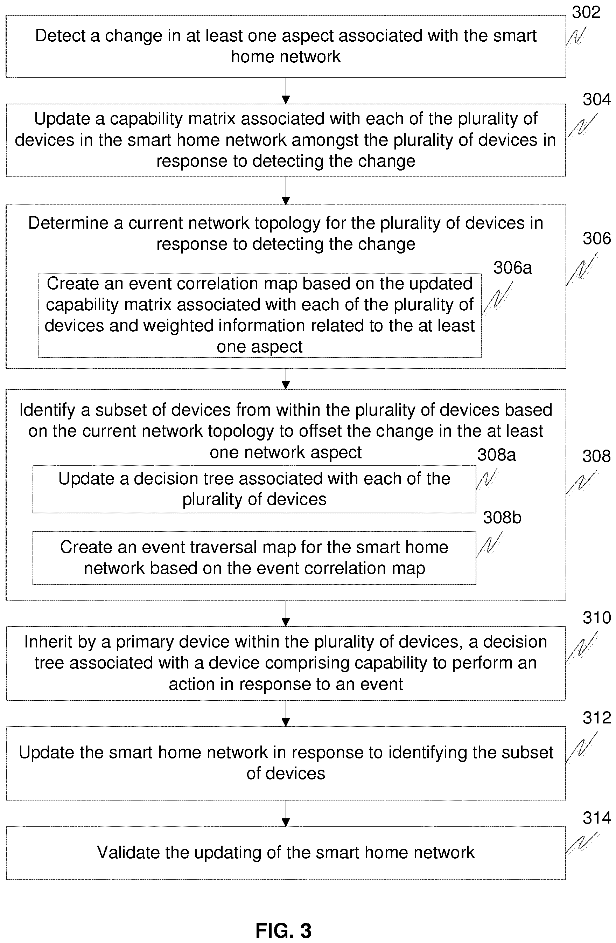

After a change has been detected in the one or more properties, a capability matrix associated with each of the plurality of devices in the smart home network is updated amongst the plurality of devices. A capability matrix for a device includes information related to functional capabilities of that device. Additionally, the capability matrix includes information regarding functional capabilities of each of the plurality of devices in the smart home network. In other words, after the change is detected, the capability matrix for each device is updated to reflect that change. Moreover, the updated capability matrix for a given device is propagated to all other devices in the smart home network, so that each device has a copy of the updated capability matrix of every other device in the smart home network. Thus, every device in the smart home network has a copy of the updated capability matrix of every other device in the smart home network. This is further explained in detail in conjunction with FIG. 3.

Thereafter, at 204, a current network topology for the plurality of devices is determined. The current network topology includes weighted information related to the one or more properties. The weighted information related to the one or more properties includes a priority associated with one or more devices and/or one or more communication channels. The one or more communication channels may include internal communication channels within the plurality of devices. Additionally, the one or more communication channels may include external communication channels that connect the smart home network with the internet 120 and the service provider.

In other words, weighted information is indicative of which set of devices should be traversed and which communication links should be used for this traversal in the case of an occurrence of an event, so as to ensure that event is handled in the most effective manner possible. Thus, different such sets of devices and communication links may be identified and priority may be associated with them. Thereafter, one of these sets with the highest priority may be chosen. Weightage may be provided based on various parameters which are pre-configured during smart home network setup. Additionally, weightage may be provided using learning based on operation. By way of an example, with regard to internet connectivity, a wired connectivity may be given higher priority. However, based on a network outage, weight assigned to wired connectivity may be reduced and other mediums (for example, a wireless medium) of internet connectivity may be assigned a higher weight.

In an embodiment, determining the current network topology includes creating an event correlation map based on the updated capability matrix associated with each of the plurality of devices and the weighted information related to the one or more properties. Based on the event correlation map, primary devices that are mandatorily required to take a corrective action in response to the occurrence of an event are also identified. This is further explained in detail in conjunction with FIG. 3.

Thereafter, at 206, a subset of devices from within the plurality of devices is identified based on the current network topology to offset the change that had occurred in the one or more properties. The subset of devices is adapted to respond to an event that the smart home network was configured to mitigate in absence of the change. In other words, before the change in the one or more properties of the smart home network had occurred, the smart home network was capable of tackling and mitigating an event. However, after the change occurred, the smart home network would have lost that capability, but, as the smart home network is evolving and adaptive, the subset of devices is identified to offset this change. In other words, the subset of devices is able to handle the event irrespective of the change that has occurred. This subset of devices is an optimal set of devices that are able to handle the event. Therefore, irrespective of the failing of one or more of a device or a communication link in the smart home network, an event is efficiently and economically handled by the subset of devices identified.

To identify the subset of devices, a decision tree associated with each of the plurality of devices is updated. A decision tree associated with a device includes information regarding actions that the device needs to perform in response to the occurrence of different events. This is further explained in detail in conjunction with FIG. 3. Further, an event traversal map for the smart home network based on the event correlation map is also created to identify the subset of devices. The event traversal map includes a plurality of event traversal paths associated with a plurality of events. Each of the plurality of event traversal paths includes information regarding a primary owner of an event, a secondary owner of the event, and a communication channel to be used in response to the occurrence of the event. This is further explained in conjunction with FIG. 3.

Therefore, the smart home network is able to detect any change within the network and is able to automatically evolve and adapt itself to a more, or most, efficient operational state. Additionally, the smart home network enables mirroring of data, events, and actions across devices based on their capability. Thus, the smart home network may be self-aware, self-learning, and self-adapting.

FIG. 3 illustrates a flowchart of a method for evolving a smart home network that includes a plurality of devices, in accordance with another embodiment. At 302, a change is detected in one or more properties associated with the smart home network. This has been explained in detail in conjunction with FIG. 2. Thereafter, at 304, a capability matrix associated with each of the plurality of devices in the smart home network is updated amongst the plurality of devices. Thus, every device in the smart home network has a copy of the updated capability matrix of every other device in the smart home network.

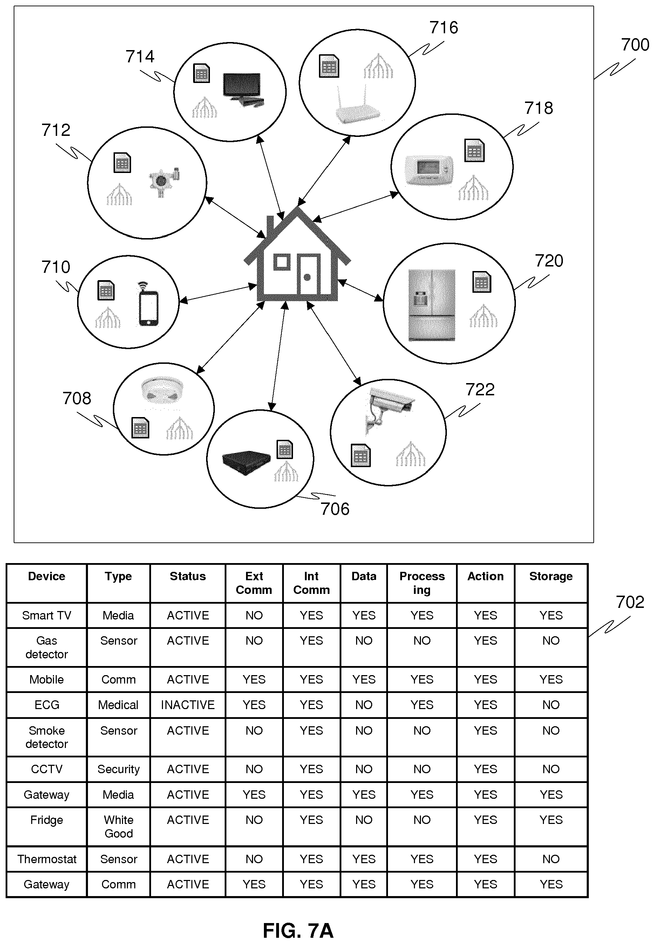

A capability matrix for a device includes information related to the functional capabilities associated with that device. The functional capabilities may include one or more of: type of a device, status of a device, decision making capability of a device, processing capacity of a device, action capability, primary functionality of a device, secondary functionality of a device, storage capacity of a device, and communication capability of a device. Communication capability of a device may include both the intra-network communication capability and inter-network communication capability. A capability matrix may further include additional information regarding the device; for example, eco-friendliness, reliability, availability, and cost effectiveness. An exemplary capability matrix is depicted in FIG. 7A. Thus, by propagating a copy of the capability matrix of every device within every other device in the smart home network, each device in the network is made aware about the capabilities of every other device in the network. This enables taking on the fly decisions on the occurrence of new events and thus evolving the smart home network.

Thereafter, at 306, a current network topology for the plurality of devices is determined. The current network topology includes weighted information related to the one or more properties. This has been explained in conjunction with FIG. 2. Determining the current network topology includes creating, at 306a, an event correlation map based on the updated capability matrix associated with each of the plurality of devices and the weighted information related to the one or more properties. The event correlation map helps in establishing the relationship between different events that may occur within the smart home network. For example, a first event may lead to a second event and so forth. Additionally, it may help in establishing which events are of greater importance and thus should be given higher priority. Moreover, it may help in identifying a single action or a series of actions that may be needed to handle an event and corresponding devices or actors that may be required for the same. Most importantly, the event correlation map enables identification of devices that may be mandatorily required to take a corrective action in response to the occurrence of an event.

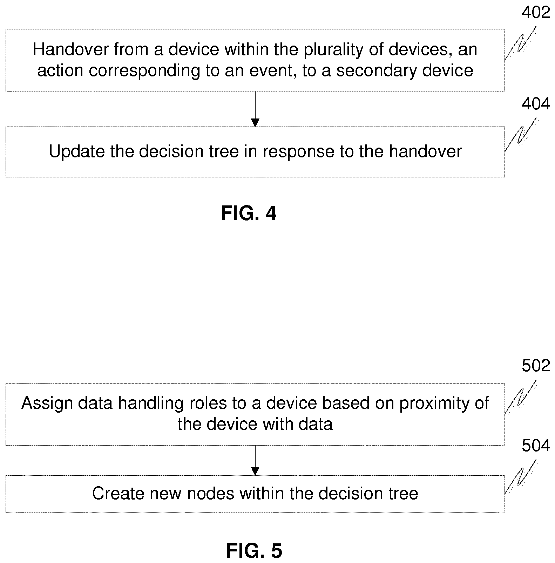

At 308, a subset of devices from within the plurality of devices is identified based on the current network topology to offset the change that had occurred in the one or more property. This has been explained in conjunction with FIG. 2. To identify the subset of devices, a decision tree associated with each of the plurality of devices is updated at 308a. A decision tree associated with a device includes information regarding actions that the device needs to perform in response to the occurrence of different events. After the decision tree for a given device has been updated, a copy of that decision tree is propagated in a set of devices in the smart home network. This set of devices has similar capabilities as the device. This enables a device to possess the information as to how other devices in the smart home network may react in response to the occurrence of an event. As the decision trees are regularly updated and evolved to reflect the changes in the one or more properties, they allow the smart home network to be self-evolving, self-learning, and self-adapting. The updating of the decision tree is further explained in detail in conjunction with FIG. 5.

At 308b, an event traversal map for the smart home network is also created based on the event correlation map to identify the subset of devices. Thus, the information contained in the event correlation map enables or helps in the creation of the event traversal map. A single event traversal map is created for the entire smart home network. The event traversal map further includes a plurality of event traversal paths associated with a plurality of events.

An event traversal path for an event is also created using the event correlation map. The event traversal path includes information regarding a primary owner of an event, a secondary owner of the event, and a communication channel to be used in response to the occurrence of the event. To this end, using the event correlation map, priority is assigned to communication channels and devices that may be required to handle an event. Additionally, priority is also assigned to properties associated with these communication channels and the devices. Examples of these properties may include, but are not limited to eco-friendliness, reliability, quality of service (QOS) parameters (for example, MTTF, MTBF, MTTR), availability, cost effectiveness, bandwidth, roundtrip delay, and jitter.

As a result, with regard to the devices, a primary owner and a secondary owner for an event are identified. The primary owner of an event is a device that will primarily handle the event and the secondary owner is a device that will either support the primary owner in handling the event or will completely handle the event when the primary owner is not operational or is offline. Additionally, with regard to the communication channels, an optimal routing is also calculated based on weightage information related to the one or more properties associated with the communication channels. These one or more properties specifically related to communication channels may include QOS parameters (for example, MTTF, MTBF, MTTR), bandwidth, roundtrip delay, and jitter. Thus, multiple event traversal paths (each of which includes a primary owner, a secondary owner, and a set of communication channels) are identified to handle an event.

Thereafter, an event traversal path that has highest weightage with respect to various properties is marked as a primary event traversal path, which should be taken in case of an occurrence of the event. This primary event traversal path is called the optimal event traversal path. All such event traversal paths that have been determined for all possible events that may occur in the smart home network are combined to create the event traversal map for the smart home network.

In an embodiment, although a first device in the subset of devices has the capability to perform an action in response to an event, a decision tree of the first device may be incomplete to handle the event. In this case, the first device, at 310, inherits a decision tree associated with a second device that has capability to perform an action in response to an event. The device may be a primary device or a secondary device. In a scenario, the secondary device may use the decision tree inherited from the primary device to perform the action for the event, which was not handled by the primary device due to failure. As a result, the deficiency in the primary/secondary device because of the absence of a complete decision tree may be cured and the primary/secondary device may be reequipped to handle the event. In an alternative embodiment, when a decision tree associated with a device is incomplete to handle an event, an action required to be executed in response to the event may be handed over from the device to a secondary device that has capability to perform that action. This is further explained in detail in conjunction with FIG. 4.

Thereafter, at 312, the smart home network is updated in response to identifying the subset of devices. In other words, the changes made in the decision trees, the creation of the event correlation map, and the creation of the event traversal map is updated within the smart home network. At 314, the updating of the smart home network is validated. In an embodiment, a validation checklist may be used to determine whether, as a result of the changes that have been made in the smart home network, devices and communication channels would perform the desired functionalities as expected or not.

FIG. 4 illustrates a flowchart of a method for handing over an action from a device to a secondary device, in accordance with an embodiment. At 402, when a decision tree associated with a device is incomplete to handle an event, an action required to be executed in response to the event is handed over from the device to a secondary device that has capability to perform that action. In an embodiment, the action may also be handed over to the secondary device upon failure of the device. Once the action has been handed over to the secondary device, the decision tree, at 404, is updated in order to reflect the change. As a result, on a subsequent occurrence of the event, the secondary device automatically acts as a primary device to handle the event.

FIG. 5 illustrates a flowchart of a method for updating a decision tree, in accordance with an embodiment. At 502, data handling roles are assigned to a device based on the proximity of the device with the data. In other words, it is the logical and physical proximity of the device that is looked at in order to assign data handling roles. For example, a sensor in the smart home network may have a Bluetooth (BT)/ Bluetooth Low Energy (BLE) communication channel and that sensor may be in communication with a home gateway. If the home gateway is down, any device having BT/BLE capability, for example, a mobile device, which is within range of the sensor may be assigned the data handling responsibility of receiving data from the sensor and performing an action thereon or transfer the data to a node in the decision tree that will process the data.

Based on assigning of the data handling roles, at 504, new nodes are created within the decision tree. The decision tree includes a plurality of nodes, such that each node in the decision tree may be traversed when an event or a condition for that node is satisfied. Based on the occurrence of an event, a plurality of branches and the plurality of nodes of the decision tree are traversed in order to identify or ascertain the action that needs to be taken in response to occurrence of the event.

Thus, when a new event or data or condition occurs in the smart home network, then to reflect this change a new node is created in the decision tree. This will enable the decision tree to facilitate performing of an action in response to the occurrence of that new event/data/condition. For example, when the home gateway goes down and a mobile device is identified to perform the action which the home gateway was supposed to perform, two new nodes would be created in the decision tree. A first new node would have a condition: "Is the home gateway down." If the answer to this condition is 'yes', then the control would move to a second new node, which may have an action: "Transmit sensor data to a mobile device and instruct mobile device to perform functionality of the home gateway." As a result, as and when new events/conditions/data occur, the decision tree would keep evolving with new nodes in order to handle these new events/conditions/data. Additionally, after the decision tree has been updated by the creation of new nodes, the decision tree is propagated amongst the plurality of devices.

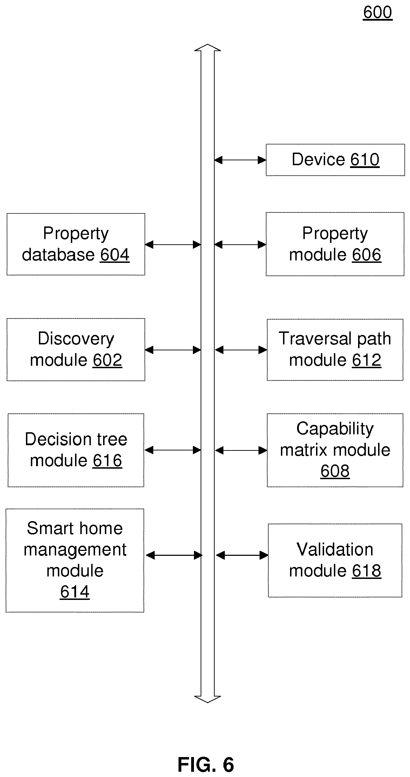

FIG. 6 is a block diagram of a system 600 for evolving a smart home network, in accordance with an embodiment. When the smart home network is initiated, a discovery module 602 performs a check to detect whether there has been any change in one or more properties of the smart home network. Additionally, after the smart home network has initiated, discovery module 602 may perform the check periodically after fixed intervals. Discovery module 602 may also perform the check when the smart home network is restarted or when an anomaly is detected within the smart home network. In other words, discovery module 602 performs the check continually. The one or more properties may include but are not limited to the functional state of a device, the functional capability of the device, the functional state of communication channels between a plurality of devices, the functional state of external communication channels, the functional state of a plurality of actuators, and the functional state of a plurality of sensors within the smart home network. This has been explained in detail in conjunction with FIG. 2. Information about the one or more properties may be stored in a property database 604 by a property module 606. The extraction of these one or more properties may also be facilitated by property module 606.

After discovery module 602 has detected a change in the one or more properties, a capability matrix module 608 updates a capability matrix associated with each of the plurality of devices in the smart home network amongst the plurality of devices. For example, discovery module 602 may update the capability matrix associated with a device 610. Moreover, capability matrix module 608 updates the capability matrix for device 610 in all other devices in the smart home network, such that each device has a copy of the updated capability matrix of every other device in the smart home network. This has been explained in detail in conjunction with FIG. 2 and FIG. 3.

Thereafter, a traversal path module 612 determines a current network topology for the plurality of devices. The current network topology includes weighted information related to the one or more properties. The weighted information related to the one or more properties includes priority associated with one or more devices and/or one or more communication channels. In other words, weighted information means which set of devices should be traversed and which communication links should be used for this traversal in the case of an occurrence of an event, so as to ensure that the event is handled in the most effective manner possible. This has been explained in conjunction with FIG. 2. To determine the current network topology, traversal path module 612 creates an event correlation map based on the updated capability matrix associated with each of the plurality of devices and the weighted information related to the one or more properties. This has been explained in detail in conjunction with FIG. 3.

Thereafter, a smart home management module 614 identifies a subset of devices from within the plurality of devices based on the current network topology to offset the change that had occurred in the one or more properties. The subset of devices is adapted to respond to an event that the smart home network was configured to mitigate in the absence of the change. This subset of devices is an optimal set of devices that are able to handle the event. Therefore, irrespective of a failing of one or more of a device, a communication link, an actuator in the smart home network, an event may be efficiently and economically handled by the subset of devices identified. This has been explained in detail in conjunction with FIG. 3.

To identify the subset of devices, a decision tree module 616 updates a decision tree associated with each of the plurality of devices. A decision tree associated with a device includes information regarding actions that the device needs to perform in response to the occurrence of different events. This has been explained in conjunction with FIG. 3. Additionally, traversal path module 612 creates an event traversal map for the smart home network based on the event correlation map to identify the subset of devices. The event traversal map includes a plurality of event traversal paths associated with a plurality of events. Each of the plurality of event traversal paths includes information regarding a primary owner of an event, a secondary owner of the event, and a communication channel to be used in response to an occurrence of the event. This has been explained in detail in conjunction with FIG. 3. After the subset of devices has been identified by updating decision trees associated with the plurality of devices and creating the event traversal map, a validation module 618 validates these changes. This has been explained in detail in conjunction with FIG. 3.

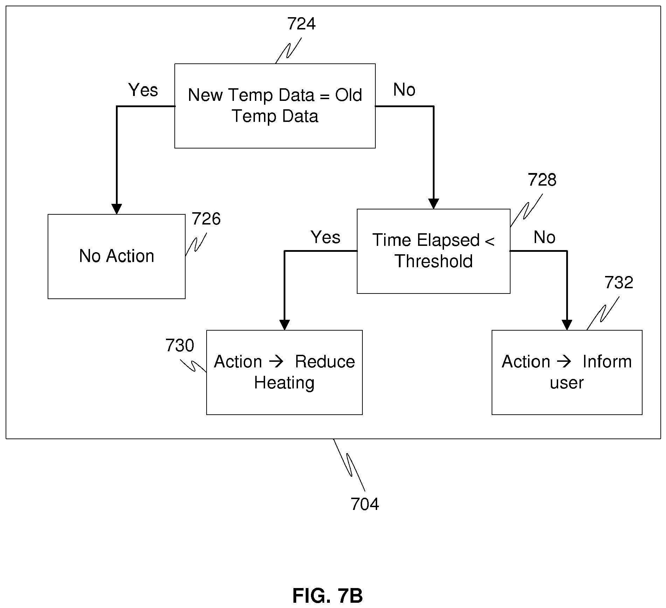

FIGs. 7A and 7B illustrate a smart home network 700, a capability matrix 702, and a decision tree 704, in an exemplary embodiment. Smart home network 700 includes a plurality of devices, i.e., a home gateway 706, a smoke detector 708, a mobile phone 710, a gas detector 712, a smart TV/set top box 714, a router 716, a thermostat 718, a smart refrigerator 720, and/or a security camera 722. Each of the plurality of devices includes a decision tree and a capability matrix, which are used to execute the methods as described in FIG. 2 to FIG. 5.

An exemplary capability matrix associated with the plurality of devices is depicted as capability matrix 702. Capability matrix 702 includes functional capability information regarding each of the plurality of devices. For example, with regard to gas detector 712, "type" is defined as "sensor"; "status" is defined as "active"; "external communication capability" is defined as "NO"; "internal communication capability" is defined as "YES"; "data handling capability" is defined as "NO"; "Processing capability" is also defined as "NO"; "Action capability" is defined as "YES"; and "Storage capability" is defined as "NO." Similarly, capability matrix 702 includes functional capability information for other devices in smart home network 700. Capability matrix 702 is stored in each device in the smart home network.

Further, an exemplary decision tree is depicted by decision tree 704 for thermostat 718. Decision tree 704 includes a node 724, at which new temperature data is compared with old temperature data taken at a previous time instance. If there is no change in the new and old temperature data, then decision tree 704 is traversed to reach a node 726, where the instruction is not to take any action. However, if there is a change in the new and old temperature data, then decision tree 704 is traversed to reach a node 728, where the "time elapsed" between the new and the old data measurement is compared with a "threshold." If the "time elapsed" is less than the "threshold", then decision tree 704 is traversed to reach a node 730, where thermostat 718 is instructed to perform an action of reducing the heating. However, if the "time elapsed" is greater than or equal to the "threshold," then decision tree 704 is traversed to reach a node 732, where the action to be performed is "informing the user," and the actor may be home gateway 706 or mobile phone 710.

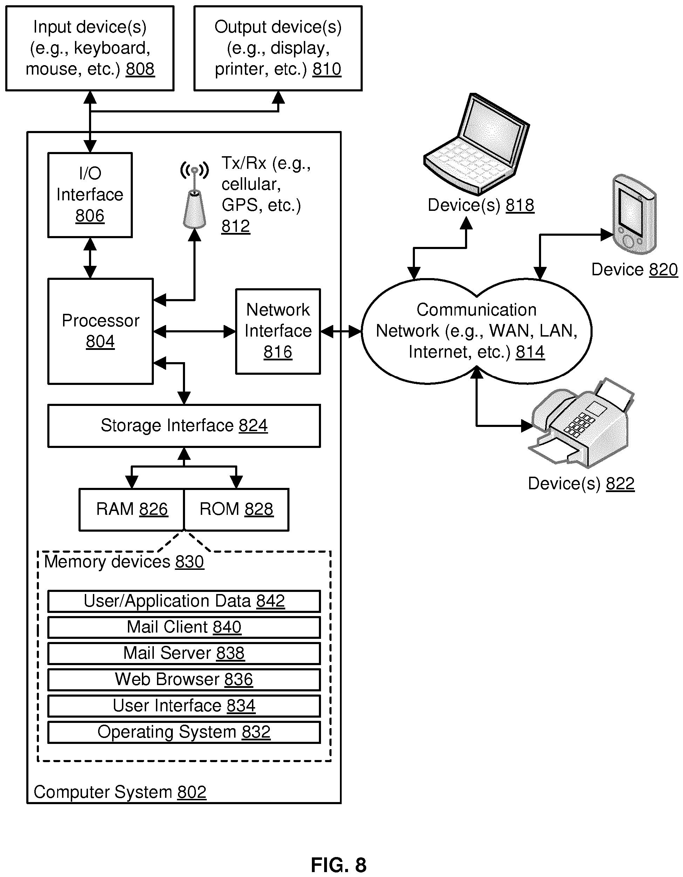

FIG. 8 is an exemplary computer system for implementing various embodiments. Computer system 802 may comprise a central processing unit ("CPU" or "processor") 804. Processor 804 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. Processor 804 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 804 may be disposed in communication with one or more input/output (I/O) devices via an I/O interface 806. I/O interface 806 may employ communication protocols/methods such as, without limitation, audio, analog, digital, monaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using I/O interface 806, computer system 802 may communicate with one or more I/O devices. For example, an input device 808 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. An output device 810 may be a printer, fax machine, video display (e.g., cathode ray tube (CRT), liquid crystal display (LCD), light-emitting diode (LED), plasma, or the like), audio speaker, etc. In some embodiments, a transceiver 812 may be disposed in connection with processor 804. Transceiver 812 may facilitate various types of wireless transmission or reception. For example, transceiver 812 may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, processor 804 may be disposed in communication with a communication network 814 via a network interface 816. Network interface 816 may communicate with communication network 814. Network interface 816 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. Communication network 814 may include, without limitation, a direct interconnection, local area network (LAN), wide area network (WAN), wireless network (e.g., using Wireless Application Protocol), the Internet, etc. Using network interface 816 and communication network 814, computer system 802 may communicate with devices 818, 820, and 822. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, computer system 802 may itself embody one or more of these devices.

In some embodiments, processor 804 may be disposed in communication with one or more memory devices (e.g., RAM 826, ROM 828, etc.) via a storage interface 824. Storage interface 824 may connect to memory devices 830 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

Memory devices 830 may store a collection of program or database components, including, without limitation, an operating system 832, a user interface application 834, a web browser 836, a mail server 838, a mail client 840, a user/application data 842 (e.g., any data variables or data records discussed in this disclosure), etc. Operating system 832 may facilitate resource management and operation of the computer system 802. Examples of operating system 832 include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 834 may facilitate display, execution, interaction, manipulation, or operation of program components through textual or graphical facilities. For example, user interfaces may provide computer interaction interface elements on a display system operatively connected to computer system 802, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, JavaScript, AJAX, HTML, Adobe Flash, etc.), or the like.

In some embodiments, computer system 802 may implement web browser 836 stored program component. Web browser 836 may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, computer system 802 may implement mail server 838 stored program component. Mail server 838 may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, computer system 802 may implement mail client 840 stored program component. Mail client 840 may be a mail viewing application, such as Apple Mail, Microsoft Entourage, Microsoft Outlook, Mozilla Thunderbird, etc.

In some embodiments, computer system 802 may store user/application data 842, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Various embodiments of the invention provide methods and systems for evolving an adaptive smart home network. The smart home network is able to detect any change within the network and is able to automatically evolve and adapt itself to a most efficient operational state. Additionally, the smart home network enables mirroring of data, events, and actions across devices based on their capability. Thus, the smart home network may be self-aware, self-learning, and self-adapting.

The specification has described methods and systems for evolving an adaptive smart home network. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method for evolving a smart home network (700) comprising a plurality of devices (706, 708, 710, 712, 714, 716, 718, 720, 722), the method comprising:
detecting (202; 302) a change in at least one property associated with the smart home network (700);
updating (304) a capability matrix (702) associated with each of the plurality of devices in the smart home network (700) amongst the plurality of devices in response to detecting the change, the capability matrix comprising information related to functional capabilities associated with each of the plurality of devices in the smart home network (700);
determining (302; 304) a current network topology for the plurality of devices in response to detecting the change, wherein the current network topology comprises weighted information related to the at least one property, the weighted information including priority associated with one or more devices in the plurality of devices and/or one or more communication channels of the smart home network, wherein determining the current network topology comprises creating (306a) an event correlation map based on the updated capability matrix (702) and the weighted information related to the at least one property; and
identifying (206; 306) a subset of devices from within the plurality of devices based on the current network topology to offset the change in the at least one property, identifying the subset of devices comprising creating (308b), based on the event correlation map, an event traversal map for the smart home network (700) comprising a plurality of event traversal paths associated with a plurality of events, each of the plurality of event traversal paths comprising information corresponding to a primary owner of an event, a secondary owner of the event, and a communication channel to be used in response to an occurrence of the event, wherein the subset of devices is adapted to respond to an event that the smart home network (700) was configured to mitigate before the change and lost capability to mitigate after the change.

2. The method of claim 1, wherein the at least one property comprises a functional state of a device within the plurality of devices, a functional capability of the device, a functional state of communication channels between the plurality of devices, a functional state of external communication channels, a functional state of a plurality of actuators, and/or a functional state of a plurality of sensors within the smart home network.

3. The method of claim 1 or 2, wherein the weighted information related to the at least one property comprises priority associated with at least one of the device and each of the communication channels.

4. The method of any one of claims 1 to 3, wherein the functional capabilities are selected from a group comprising type of a device, status of a device, communication capability of a device, decision making capability of a device, processing capacity of a device, action capability, primary functionality of a device, secondary functionality of a device, and storage capacity of a device.

5. The method of any one of claims 1 to 4, wherein identifying the subset of devices comprises updating (308a) a decision tree (704) associated with each of the plurality of devices, wherein a decision tree associated with a device comprises information corresponding to actions to be performed by the device in response to an occurrence of at least one event.

6. The method of claim 5, wherein updating the decision tree (704) associated with a device within the plurality of devices comprises:
assigning (502) data handling roles to the device based on a proximity of the device with data; and
creating (504) new nodes within the decision tree.

7. The method of claim 5 or 6, further comprising, when a decision tree associated with the device is incomplete to handle the event:
handing (402) over from a device within the plurality of devices an action corresponding to an event to a secondary device having the capability to perform the action; and
updating (404) the decision tree (704) in response to the handing over.

8. The method of claim 7, further comprising inheriting (310), by a first device within the subset of devices, a decision tree (704) associated with a second device having the capability to perform an action in response to an event, when a decision tree associated with the first device is incomplete to handle the event, the first device having a capability to perform the action in response to the event.

9. A system (802) for evolving a smart home network (700) comprising a plurality of devices (706, 708, 710, 712, 714, 716, 718, 720, 722), the system comprising:
at least one processor (804); and
a computer-readable medium (830) storing instructions that, when executed by the at least one processor, cause the at least one processor to perform all the steps of the method of any one of claims 1 to 8.

10. A non-transitory computer-readable storage medium for evolving a smart home network (700) comprising a plurality of devices (706, 708, 710, 712, 714, 716, 718, 720, 722) which, when executed by a computing device, cause the computing device to perform all the steps of the method of any one of claims 1 to 8.

## Patentansprüche

1. Verfahren zum Entwickeln eines intelligenten Heimnetzwerks (700), das aus einer Vielzahl von Geräten (706, 708, 710, 712, 714, 716, 718, 720, 722) besteht, wobei das Verfahren Folgendes umfasst:
Erkennen (202, 302) einer Veränderung bei mindestens einer mit dem intelligenten Heimnetzwerk (700) verbundenen Eigenschaft,
Aktualisieren (304) einer Funktionsfähigkeitsmatrix (702), die jedem der mehreren Geräte in dem intelligenten Heimnetzwerk (700) unter der Vielzahl von Geräten als Reaktion auf das Erkennen der Veränderung zugeordnet ist, wobei die Funktionsfähigkeitsmatrix Informationen umfasst, die sich auf die jedem der Vielzahl von Geräten in dem intelligenten Heimnetzwerk (700) zugeordneten funktionellen Fähigkeiten beziehen,
Bestimmen (302, 304) einer aktuellen Netzwerktopologie für die Vielzahl von Geräten als Reaktion auf das Erkennen der Veränderung, wobei die aktuelle Netzwerktopologie gewichtete Informationen umfasst, die sich auf die mindestens eine Eigenschaft beziehen, wobei die gewichteten Informationen eine Priorität umfassen, die einer oder mehreren Geräten in der Vielzahl von Geräten bzw. einem oder mehreren Kommunikationskanälen des intelligenten Heimnetzwerks zugeordnet ist, wobei das Bestimmen der aktuellen Netzwerktopologie das Erstellen (306a) einer Ereigniskorrelationskarte auf der Grundlage der aktualisierten Funktionsfähigkeitsmatrix (702) und der gewichteten Informationen, die sich auf die mindestens eine Eigenschaft beziehen, und
Identifizieren (206, 306) einer Teilmenge von Geräten von innerhalb der Vielzahl von Vorrichtungen, die auf der aktuellen Netzwerktopologie basieren, um die Veränderung in der mindestens einen Eigenschaft auszugleichen, Identifizieren der Teilmenge von Vorrichtungen, umfassend das Erstellen (308b), basierend auf der Ereigniskorrelationskarte, einer Ereignisdurchlaufkarte für das intelligente Heimnetzwerk (700), die aus einer Vielzahl von mit einer Vielzahl von Ereignissen verbundenen Ereignisdurchlaufpfaden besteht, wobei jeder der Vielzahl von Ereignisdurchlaufpfaden Informationen umfasst, die einem primären Eigentümer eines Ereignisses, einem sekundären Eigentümer des Ereignisses und einem Kommunikationskanal entsprechen, der als Reaktion auf einen Eintritt des Ereignisses zu verwenden ist, wobei die Teilmenge von Geräten so angepasst ist, dass sie auf ein Ereignis reagiert, für dessen Abschwächung vor der Veränderung das intelligente Heimnetzwerk (700) ausgebildet wurde und die Fähigkeit zu dessen Abschwächung nach der Veränderung verlor.

2. Verfahren nach Anspruch 1, wobei die mindestens eine Eigenschaft einen Funktionszustand eines Geräts innerhalb der Vielzahl von Geräten, eine Funktionsfähigkeit der Geräte, einen Funktionszustand von Kommunikationskanälen zwischen der Vielzahl von Geräten, einen Funktionszustand von externen Kommunikationskanälen, einen Funktionszustand einer Vielzahl von Aktoren bzw. einen Funktionszustand einer Vielzahl von Sensoren innerhalb des intelligenten Heimnetzwerks umfasst.

3. Verfahren nach Anspruch 1 oder 2, wobei die gewichteten Informationen, die sich auf die mindestens eine Eigenschaft beziehen, eine Priorität umfassen, die mindestens einem der Geräte und jedem der Kommunikationskanäle zugeordnet ist.

4. Verfahren nach einem der Ansprüche 1 bis 3, wobei die funktionellen Fähigkeiten aus einer Gruppe ausgewählt sind, die den Typ eines Geräts, den Status eines Geräts, die Kommunikationsfähigkeit eines Geräts, die Entscheidungsfähigkeit eines Geräts, die Verarbeitungskapazität eines Geräts, die Handlungsfähigkeit, die Primärfunktionalität eines Geräts, die Sekundärfunktionalität eines Geräts und die Speicherkapazität eines Geräts umfassen.

5. Verfahren nach einem der Ansprüche 1 bis 4, wobei das Identifizieren der Teilmenge von Geräten das Aktualisieren (308a) eines Entscheidungsbaums (704) umfasst, der jeder der Vielzahl von Geräten zugeordnet ist, wobei ein einem Gerät zugeordneter Entscheidungsbaum Informationen umfasst, die Aktionen entsprechen, welche vom Gerät als Reaktion auf ein Eintreten mindestens eines Ereignisses auszuführen sind.

6. Verfahren nach Anspruch 5, wobei das Aktualisieren des einem Gerät innerhalb der Vielzahl von Geräten zugeordneten Entscheidungsbaums (704) Folgendes umfasst:
Zuweisen (502) von Datenbehandlungsrollen dem Gerät auf der Grundlage einer Nähe des Geräts zu Daten, und
Erstellen (504) neuer Knoten innerhalb des Entscheidungsbaums.

7. Verfahren nach Anspruch 5 oder 6, welches, wenn ein dem Gerät zugeordneter Entscheidungsbaum unvollständig ist, um das Ereignis zu handhaben, ferner Folgendes umfasst:
Übergeben (402) einer einem Ereignis entsprechenden Aktion von einem Gerät innerhalb der Vielzahl von Geräten an ein sekundäres Gerät, welches die Fähigkeit hat, die Aktion auszuführen, und
Aktualisieren (404) des Entscheidungsbaums (704) als Reaktion auf die Übergabe.

8. Verfahren nach Anspruch 7, das ferner das Vererben (310) eines Entscheidungsbaums (704), der einem zweiten Gerät zugeordnet ist, welches in der Lage ist, als Reaktion auf ein Ereignis eine Aktion auszuführen, durch ein erstes Gerät innerhalb der Teilmenge von Geräten umfasst, wenn ein dem ersten Gerät zugeordneter Entscheidungsbaum unvollständig ist, um das Ereignis zu handhaben, wobei das erste Gerät die Fähigkeit hat, die Aktion als Reaktion auf das Ereignis auszuführen.

9. System (802) zum Entwickeln eines intelligenten Heimnetzwerks (700), das eine Vielzahl von Geräten (706, 708, 710, 712, 714, 716, 718, 720, 722) aufweist, wobei das System Folgendes umfasst:
mindestens einen Prozessor (804), und
ein computerlesbares Medium (830), das Anweisungen speichert, welche, sobald sie von dem mindestens einen Prozessor ausgeführt werden, den mindestens einen Prozessor veranlassen, die Schritte des Verfahrens eines der Ansprüche 1 bis 8 auszuführen.

10. Nicht-flüchtiges computerlesbares Speichermedium zum Entwickeln eines intelligenten Heimnetzwerks (700), das eine Vielzahl von Geräten (706, 708, 710, 712, 714, 716, 718, 720, 722) umfasst, die, sobald sie von einer Rechenvorrichtung ausgeführt werden, die Rechenvorrichtung veranlassen, alle Schritte des Verfahrens eines der Ansprüche 1 bis 8 auszuführen.

## Revendications

1. Procédé pour faire évoluer un réseau domestique intelligent (700) comprenant une pluralité de dispositifs (706, 708, 710, 712, 714, 716, 718, 720, 722), ledit procédé comprenant :
la détection (202, 302) d'un changement dans au moins une propriété associée au réseau domestique intelligent (700) ;
la mise à jour (304) d'une matrice de capacité (702) associée à chacun de la pluralité de dispositifs dans le réseau domestique intelligent (700) parmi la pluralité de dispositifs en réponse à la détection du changement, ladite matrice de capacité comprenant des informations relatives aux capacités fonctionnelles associées à chacun de la pluralité de dispositifs dans le réseau domestique intelligent (700) ;
la détermination (302 ; 304) d'une topologie de réseau actuelle pour la pluralité de dispositifs en réponse à la détection du changement, ladite topologie de réseau actuelle comprenant des informations pondérées relatives à la au moins une propriété, lesdites informations pondérées comprenant une priorité associée à un ou plusieurs dispositifs dans la pluralité de dispositifs et/ou à un ou plusieurs canaux de communication du réseau domestique intelligent, ladite détermination de la topologie de réseau actuelle comprenant la création (306a) d'une table de corrélation d'événements sur la base de la matrice de capacité mise à jour (702) et des informations pondérées relatives à la au moins une propriété ; et
l'identification (206, 306) d'un sous-ensemble de dispositifs au sein de la pluralité de dispositifs sur la base de la topologie de réseau actuelle pour compenser le changement dans la au moins une propriété, l'identification du sous-ensemble de dispositifs comprenant la création (308b) sur la base de la table de corrélation d'événements, d'une table transversale d'événements pour le réseau domestique intelligent (700) comprenant une pluralité de chemins transversaux d'événement associés à une pluralité d'événements, chacun de la pluralité de chemins transversaux d'événement comprenant des informations correspondant à un propriétaire principal d'un événement, un propriétaire secondaire de l'événement et un canal de communication à utiliser en réponse à une occurrence de l'événement, ledit sous-ensemble de dispositifs étant adapté pour répondre à un événement, ledit réseau domestique intelligent (700) ayant été configuré pour atténuer ce dernier, avant le changement et la capacité perdue pour atténuer après le changement.

2. Procédé selon la revendication 1, ladite au moins une propriété comprenant un état fonctionnel d'un dispositif dans la pluralité de dispositifs, une capacité fonctionnelle du dispositif, un état fonctionnel des canaux de communication entre la pluralité de dispositifs, un état fonctionnel des canaux de communication externes, un état fonctionnel d'une pluralité d'actionneurs et/ou un état fonctionnel d'une pluralité de capteurs dans le réseau domestique intelligent.

3. Procédé selon la revendication 1 ou 2, lesdites informations pondérées associées à la au moins une propriété comprenant une priorité associée à au moins l'un parmi le dispositif et chacun des canaux de communication.

4. Procédé selon l'une quelconque des revendications 1 à 3, lesdites capacités fonctionnelles étant choisies dans un groupe comprenant le type d'un dispositif, le statut d'un dispositif, la capacité de communication d'un dispositif, la capacité de prise de décision d'un dispositif, la capacité de traitement d'un dispositif, la capacité d'action, la fonctionnalité principale d'un dispositif, la fonctionnalité secondaire d'un dispositif et la capacité de stockage d'un dispositif.

5. Procédé selon l'une quelconque des revendications 1 à 4, ladite identification du sous-ensemble de dispositifs comprenant la mise à jour (308a) d'un arbre décisionnel (704) associé à chacun de la pluralité de dispositifs, un arbre décisionnel associé à un dispositif comprenant des informations correspondant aux actions à être effectuées par le dispositif en réponse à une occurrence d'au moins un événement.

6. Procédé selon la revendication 5, ladite mise à jour de l'arbre décisionnel (704) associé à un dispositif dans la pluralité de dispositifs comprenant :
l'attribution (502) de rôles de gestion de données au dispositif sur la base de la proximité du dispositif avec des données ; et
la création (504) de nouveaux noeuds dans l'arbre décisionnel.

7. Procédé selon la revendication 5 ou 6, comprenant en outre, lorsqu'un arbre décisionnel associé au dispositif est incomplet pour gérer l'événement :
le transfert (402) d'une action correspondant à un événement d'un dispositif dans la pluralité de dispositifs à un dispositif secondaire possédant la capacité d'effectuer l'action ; et
la mise à jour (404) de l'arbre décisionnel (704) en réponse au transfert.

8. Procédé selon la revendication 7, comprenant en outre l'héritage (310), par un premier dispositif dans le sous-ensemble de dispositifs, d'un arbre décisionnel (704) associé à un second dispositif possédant la capacité d'effectuer une action en réponse à un événement, lorsqu'un arbre décisionnel associé au premier dispositif est incomplet pour gérer l'événement, le premier dispositif possédant une capacité à effectuer l'action en réponse à l'événement.

9. Système (802) pour faire évoluer un réseau domestique intelligent (700) comprenant une pluralité de dispositifs (706, 708, 710, 712, 714, 716, 718, 720, 722), ledit système comprenant :
au moins un processeur (804) ; et
un support lisible par ordinateur (830) stockant des instructions qui, lorsqu'elles sont exécutées par le au moins un processeur, amènent le au moins un processeur à exécuter toutes les étapes dudit procédé selon l'une quelconque des revendications 1 à 8.

10. Support de stockage lisible par ordinateur non transitoire pour faire évoluer un réseau domestique intelligent (700) comprenant une pluralité de dispositifs (706, 708, 710, 712, 714, 716, 718, 720, 722) qui, lors de l'exécution par un dispositif informatique, amènent le dispositif informatique à exécuter toutes les étapes dudit procédé selon l'une quelconque des revendications 1 à 8.
